Europäisches Patentamt

**European Patent Office**

Office européen des brevets

(11) Publication number: **0 202 802**
A1

(12) **EUROPEAN PATENT APPLICATION**

(21) Application number: **86303296.7**

(22) Date of filing: **30.04.86**

(51) Int. Cl.⁴: **A 61 C 1/05**
**A 61 C 1/08**

(30) Priority: **13.05.85 JP 70466/85 U**
**28.11.85 JP 268029/85**

(43) Date of publication of application:
**26.11.86 Bulletin 86/48**

(84) Designated Contracting States:
**CH DE FR GB IT LI NL SE**

(71) Applicant: **Tukada, Yoshiro**
**3-698, Hinatawada**
**Oome-shi Tokyo(JP)**

(72) Inventor: **Tukada, Yoshiro**
**3-698, Hinatawada**
**Oome-shi Tokyo(JP)**

(74) Representative: **Thomas, Roger Tamlyn et al,**
**D. Young & Co. 10 Staple Inn**
**London WC1V 7RD(GB)**

(54) Internal pollution prevention device for dental cutting tool assembly.

(57) A dental unit(1) including a dental cutting tool (10) to be used to cut teeth and a driving device (3) connected to the cutting tool(10) is prevented from being polluted. The cutting tool (10) comprises a hollow sheath(2), a head fixed(3) to the tip of the sheath(2) and a cutting tool (10) rotatably fitted to the head(3). A pressure fluid is always fed into the sheath and head to keep the cutting tool(10) filled with the pressure fluid. As the pressure fluids are continually forced out of a clearance and hole formed in the head,(26,261) the pollutants deposited on the head(3) and cutting tool (10) will not enter the sheath (2) and head(3).

Fig.2

## INTERNAL POLLUTION PREVENTION DEVICE
## FOR DENTAL CUTTING TOOL ASSEMBLY

### Background of the Invention

This invention relates to an internal pollution prevention device for a dental cutting tool assembly.

In a recently proposed dental cutting tool assembly (hereinafter called a hand piece), a tip cutting tool is rotated at high speed by air pressure fed from a suitable external air pressure source, and for the purpose of preventing the tip cutting tool from becoming over heated during use and to wash away tooth scraps, running water is directed onto the tip cutting tool from a suitable external source.

Thus a tooth may be cut within a short time without pain to the patient. However, there is a danger that, when the hand piece is to be removed from the mouth after treatment, an accident may be caused because the tip cutting tool is rotating at a high speed.

Therefore, it has already been proposed to stop the feed of pressurised air and thus the rotation of the tip cutting tool after the tooth has been treated. It follows that when the hand piece is to be removed from the mouth, the rotation of the tool will already have stopped so preventing the possibility of accident.

However, with the above mentioned suggestion, in order to stop the rotation of the tip cutting tool, only the feed of pressurised air is stopped. Therefore, the rotation of the tip cutting tool will not stop immediately but it will continue to rotate for a while due to its inertia.

Because of this continued rotation of the cutting tool, turbine blades located in the hand piece head will idle so causing a sucking action inwards from the exterior of the hand piece and water deposited on the tip cutting tool and hand piece exterior near the tool will enter the hand piece interior as waste material containing tooth debris, saliva, blood and germs.

Further, when the inertia rotation of the cutting tool caused by interruption of the feed of pressurised air is stopped by temporarily reverse feeding pressurised air through a discharge line, there will be a danger of causing a sucking action by the reverse rotation. As such reverse feeding of pressurised air is momentary, the air pressure inside the hand piece will soon become the same as that outside, and waste will to some extent be able to enter through the cutting tool holder and clearance.

As a result, not only will the hand piece interior be polluted but also the pollution may extend through the entire driving device in the hand piece, through the air feed circuit and water feed circuit and the entire dental unit.

When only the hand piece itself is polluted, the pollution may be removed by such means as gas-sterilizing the hand piece over a long time but, once the pollution diffuses through to the driving device and the dental unit supplying it, it will not be possible to remove the pollution and the hand piece will always remain in an unhygenic state.

Therefore, when another patient is to be treated with such a hand piece, such pollutants as, for example, B-type viruses will be likely to be transmitted to the patient. When this is repeated, disease germs will be propagated to many people.

Summary of the Invention

Therefore, a primary aim of the present invention is to prevent pollution within a dental hand piece.

Another aim of the present invention is to prevent tooth debris, saliva, blood and germs or waste containing them from entering a hand piece through a clearance of a cutting tool holder or a hole for fitting and detaching a cutting tool, not only while the cutting tool is being rotated and used but also while rotation of the tool is stopped and the tool is not used.

Further, another aim of the present invention is to prevent pollution from extending not only to the interior of the hand piece but also into the air feed lines, water feed lines and dental unit connected to the hand piece.

A further aim of the present invention is to prevent germs from spreading to patients through the use of the hand piece.

According to one aspect the invention provides a dental cutting tool having a hollow sheath, a head fixed to the tip of the sheath and a cutter rotatably fitted to the head, characterised in that a pressure fluid is always fed in the above mentioned sheath and head to prevent external pollutants from entering the sheath and head.

According to another aspect the invention provides a dental cutting tool assembly comprising a head containing an air-driven motor and means for connecting a cutting tool to the motor, at least part of the air used for driving the motor being discharged adjacent the cutting tool to remove debris therefrom, air also being discharged adjacent the cutting tool for a period after the motor is stopped.

## Description of the Drawings

Fig. 1 is a partly vertically sectioned elevation of a hand piece according to an embodiment of the present invention.

Fig. 2 is a magnified sectioned view of the head portion of the hand piece of Fig. 1.

Fig. 3 is a magnified sectioned view of the head portion of the hand piece according to another embodiment of the present invention.

Fig. 4 is a circuit diagram of the hand piece according to another embodiment of the present invention.

Fig. 5 is a partly vertically sectioned magnified elevation of the head portion of the hand piece according to another embodiment of the present invention.

## Description of the Preferred Embodiments

The present invention aims to always keep a gas which is a pressure fluid fed in a sheath and head so that external pollutants may be prevented by the pressure fluid from entering the sheath and head. There are embodiments wherein such pressure fluid is fed from the sheath end and wherein the head is provided with a negative pressure generation preventing mechanism to which such pressure fluid is fed directly.

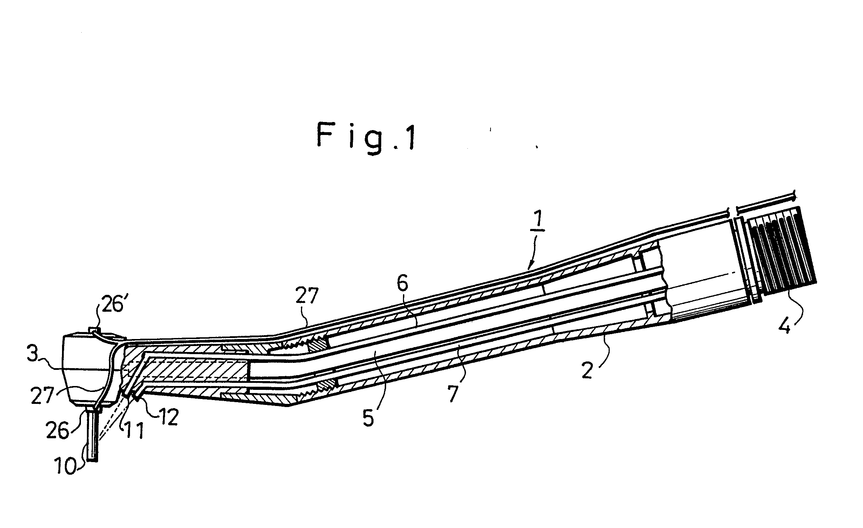

Figs. 1 to 3 show an embodiment wherein the head is provided with a negative pressure generation preventing mechanism into which a pressure fluid gas is continuously fed.

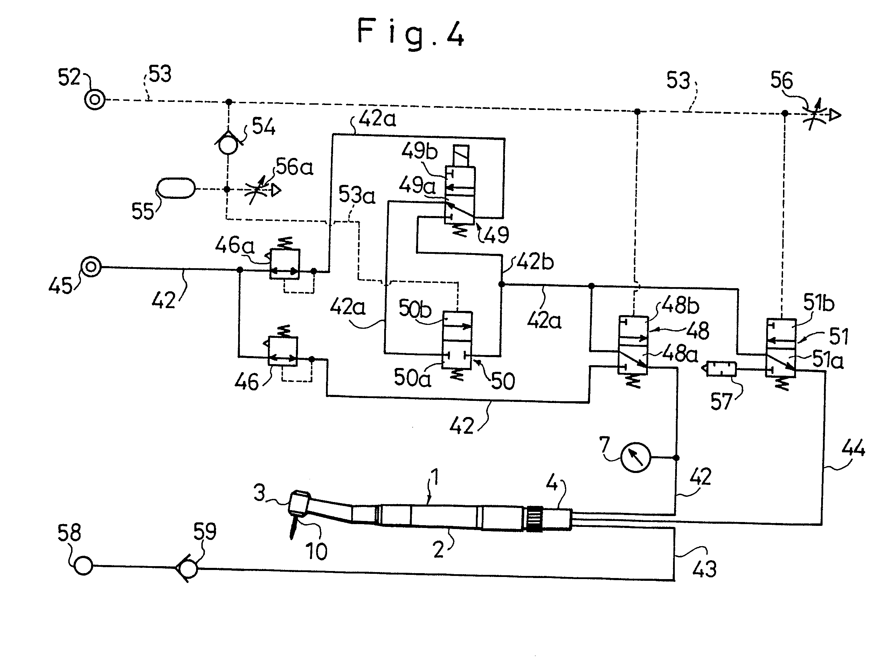

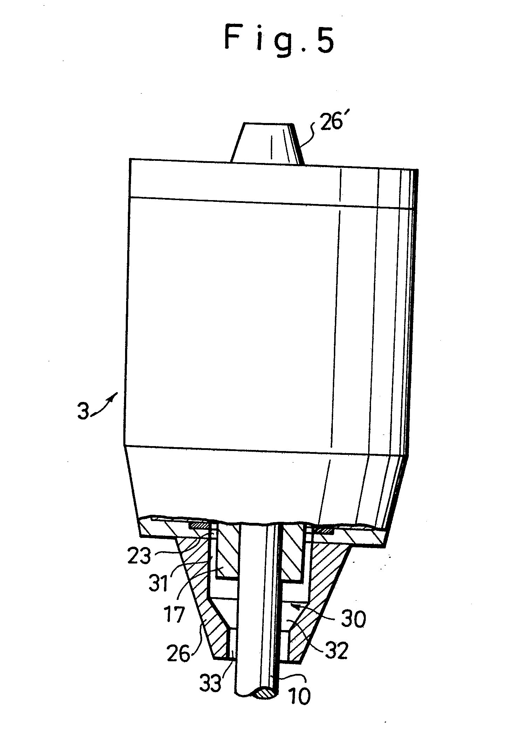

On the other hand, Figs. 4 and 5 show an embodiment wherein the sheath is connected with a pressure gas feed line from which a pressure gas is always fed to the sheath and head.

The respective embodiments will now be described with reference to the drawings.

A dental hand piece 1 to be used to cut teeth has a sheath 2 which is a hollow body, a head 3 fixed to the tip of the sheath 2 and an adapter 4 connected to the rear end of the sheath 2.

A main pipe 5 feeding driving air to an air turbine, a water pipe 6 for feeding washing water and an air pipe 7 for feeding spraying air are provided within the sheath 2. These pipes 5, 6 and 7 are connected respectively to an air source and a water source connected to the adapter 4. The air fed through the main pipe 5 rotates turbine blades in the head 3. Thereafter part of this air escapes from an opening (not illustrated) in the adapter 4 via the sheath 2 and the rest of the air is discharged from a clearance 23 and hole 24 in the head 3. The hand piece is thus a so-called hole air turbine hand piece. Hand pieces with a 2-hole air turbine system and a 4-hole air turbine system are also known.

A hand piece with a 3-hole air turbine system will now be explained with reference to Figs. 1, 2 and 3.

The main pipe 5 opens, at the tip, into the head 3 through a hole 9 provided in a housing 8 of the head 3.

A nozzle 11 is connected to the water pipe 6 and a nozzle 12 is also connected to the air pipe 7 so that, when jets of washing water and air are directed toward a cutting tool 10 from the nozzles 11 and 12, the washing water will be sprayed in the form of mist onto the cutting tool 10 by the pressure of the air. Therefore, when teeth are being cut by rotating the cutting tool 10 at a high speed, tooth scraps will be washed away, waste deposited on the cutting tool will be washed off and heat generation during cutting will be prevented.

In the housing 8 there are two interconnected casings 13 and 14. A rotary shaft 17 is rotatably supported by bearings 15 and 16 in the casings 13 and 14.

Turbine blades 18 are radially connected on the outer periphery of the rotary shaft 17 so that, when a high pressure air jet introduced through the main pipe 5 is directed toward the blades 18, the rotary shaft 17 will rotate at a high speed.

A chuck 19 is mounted, for example by a screw thread 20, within the rotary shaft 17. The cutting tool 10 is removably fitted into this chuck 19 so as to rotate at a high speed with the rotary shaft 17.

A space 21 is provided between the casing 13 and blades 18. This space 21 is vented through clearances 15a and 16a within the bearings 15 and 16, clearances 22 and 23 provided in the lower inner peripheries of the casing 14 and housing 8 and holes 24 and 25 provided above the casing 14 and housing 8. The holes 24 and 25 are holes for opening and closing the chuck 9 and attaching and detaching the cutting tool 10.

The negative pressure generation preventing mechanism will now be described.

A truncated conical hollow cover 26 is provided opposite the clearance 23 at the centre of the bottom of the head 3 and a cover 26' of the same shape is also provided opposite the hole 25 at the centre of the top of the head 3. Spaces 30 and 30' are provided respectively within the covers 26 and 26'. These spaces 30 and 30' consist respectively of passages 31, 32, 33 and 31', 32', 33'.

The high pressure air fed through the hole 9 from the main pipe 5 is discharged from the spaces 30 and 30' by way of the space 21, clearances 22 and 23 and holes 24 and 25. In the spaces 30, 30', a pressure fluid, for example pressurised air, forced out of the clearance 23 or hole 25 is temporarily stored within the cover 26, 26' so that the ejection speed, amount ejected and direction of ejection are kept relatively constant. As a result, a negative pressure will not be generated by a local flow disturbance of the pressurised air within the head 3. A part of the pressurised gas fed through the main pipe is fed into the spaces 30, 30' as mentioned above but a supply of fluid such as pressurised air is always maintained by another air feed means. For this purpose, the covers 26 and 26' are provided respectively with air feed holes 34 and 35 and an air feed pipe 27 connected to the air feed holes 34 and 35, is secured along the outer peripheries of the sheath 2 and head 3 and is connected to an air source so that pressurised air may be continually fed into the spaces 30, 31 through the air feed pipe 27.

During treatment of the patient, high pressure air will be fed through the main pipe 5 to rotate the cutting tool 10 at a high speed. However, even at this time, air will be always led into the spaces 30, 30' through the air feed pipe 27, as well as from the clearances 22 and 23 and holes 24 and 25, thus filling and pressurising the spaces 30, 30' with air. When the treatment is over and the feed of pressurised air through the main pipe 5 is stopped, air will be fed through the air feed pipe 27 and stored not only within the sheath 1 and head 3 but also within the spaces 30, 30'.

Therefore, even if waste containing tooth scraps, disease germs and any other pollutants is deposited on the cutting tool 10, the end part of the rotary shaft 17 and the surface of the housing during treatment, such pollutants will be pushed back by the air pressure accumulated within the spaces 30, 30' and will not be sucked into the head even when the rotation of the cutting tool 10 is suddenly stopped.

If the covers 26 and 26' and spaces 30 and 30' are not present and pressurised air is forced out of the clearance 23 and hole 25 during use, the air will not be always uniformly blown out and great differences may occur, for example, in the ejection direction and peripheral ejection speed. Therefore, the flow will locally separate, a negative pressure will be generated and sucking in of the surrounding fluid will occur so that the waste and disease germs deposited on and near the cutting tool 10 will be likely to enter the hand piece.

However, if the covers 26 and 26' are provided as a negative pressure generation preventing mechanism, which operates irrespective of how the gas is ejected from the clearance 23 and hole 25, the gas will be temporarily stored within the spaces 30 and 30' within the covers 26 and 26' and will be uniformly ejected from the hollow parts 30 and 30' when the pressure within the hollow parts 30 and 30' becomes high, no negative pressure will be generated and sucking in of waste deposited on and near the cutting tool 10 will be prevented.

In an experiment, when the covers 26 and 26' were fitted and the tool was operated for 5 minutes in a solution of black ink, pollution was prevented not only within the hand piece but also within the covers 26 and 26' and near the passage 33.

Therefore, if the head 3 containing no pollutant as mentioned above is dipped as it is into a sterilizing liquid, the hand piece 1 will be sterilized on the outer surface and will be able to be used to treat the next patient in a hygenic state.

As shown the air feed pipe 27 is provided along the outer peripheries of the head 3 and sheath 2 but it may be mounted in the sheath 2 and various arrangements can be used depending on the kind of hand piece, if the internal construction is not adversely influenced and the performance is not adversely influenced.

In short, the sheath, head and the spaces 30 and 30' in the covers 26 and 26' may be continuously filled with pressurised air so that any pollutant may be prevented by this pressurised air from entering the head 3 and sheath 2.

In some cases, pollutants may enter through the parts of the nozzles 11 and 12. Air and water may be continually discharged from these nozzles or a check valve may be provided so that no water may flow back and so that air and water will remain within the pipe.

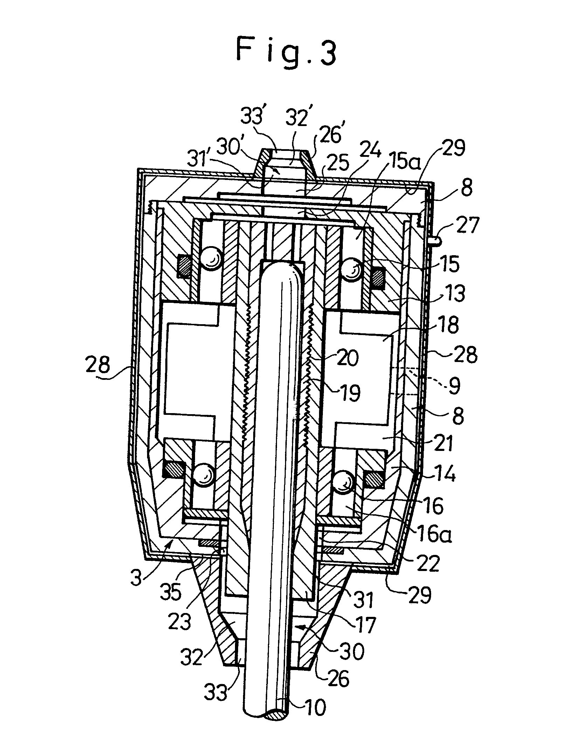

Fig. 3 shows another embodiment of the present invention.

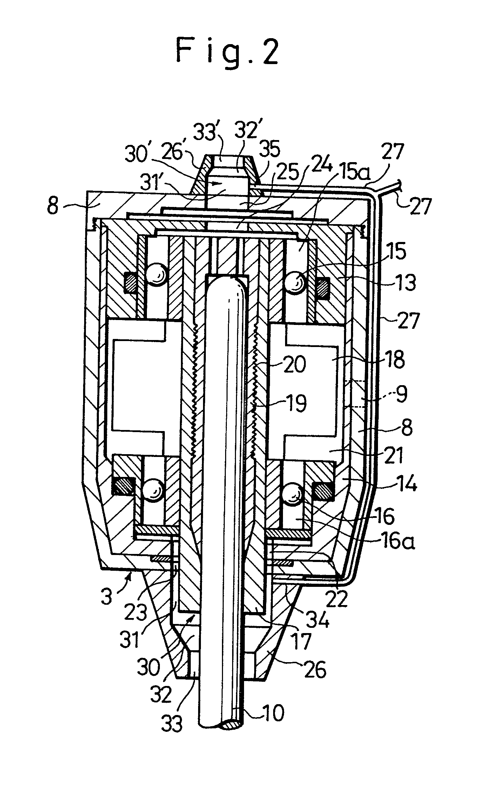

The housing 8 of the head 3 is covered on all or part of its outer surface with a cover 28 made of a synthetic resin or metal. A slight clearance 29 through which air is to pass is provided between the inner surface of the cover 28 and the outer surface of the head 8. This clearance 29 communicates with the spaces 30 and 30' through the clearances 35 and with the interiors of the head 3 and sheath 1 through the clearance 22 and hole 25. A hole is provided in any suitable position in the cover 28 and communicates with the clearance 29. An air feed pipe 27 as in Fig. 2 is connected to this hole so as to maintain a fluid pressure

- 8 -

in the head 3 and spaces 30 and 30' through the clearance 29.

Therefore, irrespective of whether the cutting tool 10 is rotating during the treatment or is stopped while being not used, pressurised air within the clearance 29 will be always led into the spaces 30 and 30' and, as in the case of Fig. 1, pollutants will be pushed back and will not enter the head.

The cover 28 is secured to the housing 8 by pins, bolts or adhesive.

As shown the cover 28 covers substantially the entire outer surface of the head 3. Alternatively it may be provided on the entire outer surface of the head and sheath or it may be provided only near the clearance 23 and hole 25.

Fig. 4 shows another embodiment of the present invention.

An air feed line 42 and a water feed line 43 are connected respectively to the adapter 4 of the hand piece 1. An air discharge line 44 is also connected to the hand piece 1.

As in Fig. 1, the cutting tool 10 is removably and rotatably held at the tip of the hand piece 1 for high speed rotation by air fed through air feed line 42. The air may be partly discharged through the air discharge line 44 and may be partly discharged through the clearance 23 and hole 25 formed in the head 3 as in Fig. 1. The construction of the head 3 is the same as in Fig. 1 except that, in contrast to Fig. 1, the covers 26 and 26' are not provided in this embodiment. During high speed rotation of the cutting tool, running water from the water feed line 43 will be directed onto the cutting tool 10.

A pressurised air feed source 45 is connected to the air feed line 42 and may be an air pump or compressor which can provide air at a predetermined pressure to the air feed line 42. The above air feed line 42 has an auxiliary air feed line 42a. The auxiliary air feed line 42a and air feed line 42 have respective reduction valves 46a and 46 provided with relief means so that the air pressure may be set to be the most suitable for driving the cutting tool 10 and effecting pollution prevention as described below. Generally the valve 46a is set to provide a lower pressure than the valve 46. A pressure gauge 47 is provided in the air feed line 42 and can be used to check the air pressure fed to the head.

A switching valve 48 is arranged in the air feed line 42 and switching valve 49 and 50 are arranged in the auxiliary air feed line 42a, the valve 49 being solenoid-operated. The auxiliary air feed line 42a is connected to the switching valve 48 arranged in the air feed line 42 and to a switching valve 51 arranged in the air discharge line 44 through the switching valve 50. The auxiliary air feed line 42a is also connected by a bypass 42b to the switching valve 49, the bypass 42b being in parallel with the switching valve 50.

The switching valves 48, 50 and 51 are arranged to be switched by the feed of a pilot pressure from a pilot pressure source 52. The switching valve 50 is connected to an auxiliary pilot line 53a branched from a pilot line 53 connected to the pilot pressure source 52 and is arranged to be switched by pilot pressure from the auxiliary pilot line 53a.

A check valve 54 is arranged in the auxiliary pilot line 53a to prevent the pilot pressure from returning to the pilot pressure source 52. The auxiliary pilot line 53a is provided with a reservoir tank 55 to accumulate pilot pressure.

The pilot line 53 and auxiliary pilot line 53a are provided respectively with air discharge ports 56 and 56a.

Furthermore, the switching valve 48 has an air feeding position 48a and air passing position 48b so that, when in the air feeding position 48a, the pressurised air from the auxiliary air feed line 42a will be able to flow to the air feed line 42 and, when moved to the air passing position by the action of the pilot pressure, the pressurised air from the air feed line having passed through the reduction valve 46 will be able to flow through the whole air feed line 42 to the hand piece 1.

The switching valve 50 will normally be in a closed position and will prevent the auxiliary air feed line 42a from being connected, but, when the pilot pressure is applied, the switching valve 50 will move to an open position 50b and the auxiliary air feed line 42a will be operative.

The switching valve 51 will normally be in an air feed position 51a and the pressurised air in the auxiliary air feed line 42a will be able to flow to the air discharge line 44 but, when the pilot pressure is applied the switching valve 51, it will move to an air discharge position 51b and the air discharge line 44 will be connected to a muffler 57.

The switching valve 49 will normally be in the air feed position 49a so that the pressurised air in the auxiliary air feed line 42a having passed the above mentioned reduction valve 46a will be fed to the hand piece 1 through the switching valve 50 but, when the solenoid is excited, the valve 49 will be in the connecting position 49b so that the pressurised air in the auxiliary air feed line 42a will be fed to the hand piece 1 through the bypass 42b.

The water feed line 43 is connected to a water source 58 and has a check valve 59 to prevent water fed to the hand piece 1 through the water feed line 43 from flowing back, that is to say, to prevent the water feed line 43 from being polluted by waste flowing in from the hand piece 1 due to back flow of water in the water feed line 43.

In the Fig. 4 embodiment of the present invention, when the hand piece 1 is being used, the air from the pressurised air feed source 45 will be delivered to the air feed line 42 and auxiliary air feed line 42a and pilot pressure from the pilot pressure source 52 will be applied to the respective pilot switching valves 48, 50 and 51. The water from the water source 58 will also be fed into the hand piece 1 through the water feed line 43.

The pressurised gas in the auxiliary air feed line 42a will be prevented by activation of the switching valves 48 and 51 from flowing but the pressurised gas in the air feed line 42 will be fed into the hand piece 1 through the air feed position 48b of the switching valve 48 to rotate and drive the tip cutting tool 10 the same as in Fig. 1. The pressurised gas having rotated and driven the tip cutting tool 10, will be partly discharged out of the clearance 23 and hole 24 formed in the head 3 but mostly will flow into the air discharge line 44; it will then pass through the air discharge position 51b of the switching valve 51 and will be discharged out of the muffler 57. Thus, the hand piece will be filled with the pressurised gas which will be forced out of the clearance 23 and hole 24 to remove pollutants deposited near the clearance 23 and hole 24.

When the rotation of the tip cutting tool 10 is to be stopped, the pilot pressure in the pilot circuit 53 will be discharged through the air discharge port 56. The switching valves 48 and 51 will then return to the air feed positions 48a and 51a. On the other hand, the switching valve 50 in the auxiliary air feed line 42a will move to the open position 50b for a while due to the accumulated pressure within the reservoir tank 55. Therefore, the pressurised gas in the auxiliary air feed line 42a will be fed simultaneously into the air feed line 42 and air discharge line 44 through the switching valves 48 and 51. Thus the blades 18 driving the cutting tool 10, and thereby cutting tool 10 itself, will be instantaneously stopped.

When the rotation stops, the hand piece 1 will be filled with the pressurised gas through the air feed line 42 and air discharge line 44, and the pressurised gas will be forced out through the clearance 23 and hole 25 and the waste deposited on the cutting tool 10 and head 3 will be prevented from entering the hand piece 1.

Even if the feed of water from the water source 58 is stopped when the above mentioned rotation is stopped, the check valve 59 prevents the water flowing back and there will be no danger of waste entering at the tip of the hand piece 1. The hand piece 1 is provided with nozzles 11 and 12 as in Fig. 1. The air flow from the nozzle 12 is not interrupted. The other nozzle 11 is provided with a check valve in the line between it and the water source as described with reference to Fig. 4. When the rotation has been stopped for a while, the switching valve 50 in the auxiliary air feed line 42a will be returned to the closed position 50a because the pressurised gas in tank 55 runs out through the air discharge port 56a, but, if the solenoid switching valve 49 is excited and is switched to the open position 49b, the pressurised air in the auxiliary air feed line 42a will flow to the switching valves 48 and 51 through the bypass 42b instead of the pilot switching valve 50 the cutting tool 10 being kept stopped and the hand piece 1 being filled with pressurised air.

If the variable throttle of the air discharge port 56a connected to the reservoir tank 45 is adjusted, the time of maintaining the rotation stop and filling the hand piece with pressurised air will be correspondingly adjusted. Further, using the solenoid switching valve 49 and irrespective of the adjustment of the variable throttle of the air discharge port 56a, the rotation stop can be continued for any desired time. As long as the pressurised gas can be fed simultaneously to the air feed line and air discharge line when the hand piece 1 is stopped, not only the illustrated circuits but other similar circuits may be used.

Fig. 5 shows another embodiment of the present invention wherein covers 26 and 26' are fitted to the head 3 of the hand piece 1 relating to the embodiment in Fig. 4.

That is to say, the formation of the hand piece 1 and the air feed line 42 and air discharge line 44 connected to this hand piece 1 are the same as in the embodiment of Fig. 4 and the covers 26 and 26' are fitted to the head 3 opposite to the clearance 23 and hole 24 substantially in the same manner as in Fig. 2.

Therefore, when the hand piece is to be used, pressurised gas will be fed through the air feed line 42, will fill the sheath 2 and head 3, will drive the air turbine to rotate the cutting tool 10, will be partly discharged out through the air discharge line 44 and will be partly forced out of the covers 26 and 26'.

When the rotation of the cutting tool 10 is to be stopped, pressurised gas will be fed simultaneously to the air feed line 42 and air discharge line 44 and, at this time, the pressurised gas filling the sheath 2 and head 3 will be discharged out of the covers 26 and 26'. Thus, irrespective of the flow of the gas forced out of the clearance 23 and hole 24, the gas will be temporarily stored within the passages 30 and 30' within the covers 26 and 26' and will be uniformly forced out of the passages 30 and 30' to prevent the generation of a negative pressure and the sucking in of pollutants deposited on and near the cutting tool 10.

As described above, a pressure fluid is always fed into the sheath and head to fill the hand piece and thus has the following advantages:-

(1)      As pressurised gas is always being forced out of the clearance between the cutting tool holder and the hole for fitting and detaching the cutting tool, the waste containing tooth scraps, saliva, blood and miscellaneous germs deposited on the cutting tool will not enter the hand piece.

(2)      This helps prevention of pollution of not only the interior of the hand piece but also the device for driving the hand piece and the entire dental unit including such device.

(3)      The long time required for gas sterilization is no longer required and the hand piece can be sterilized simply within a short time. This is because sterilization of the interior is difficult and such sterilization is no longer required when waste is removed as described above.

## CLAIMS

1. An internal pollution preventing device for a dental cutting tool assembly having a hollow sheath, a head fixed to the tip of the sheath and a cutting tool rotatably fitted to the head, wherein a pressure fluid is continuously fed into said sheath and head to prevent the entry of external pollutants.

2. An internal pollution preventing device for a dental cutting tool assembly according to claim 1 wherein the pressure fluid feed means comprises an air feed line for supplying air to drive the cutting tool and an air discharge line connected to said sheath and the arrangement is such that, when the cutting tool stops, the pressure fluid will be fed simultaneously from said air feed line and discharge line.

3. An internal pollution preventing device for a dental cutting tool assembly according to claim 1 wherein the pressure fluid feed means comprises a negative pressure generation preventing device provided near the outlet of the pressure fluid and an air feed pipe connected to said negative pressure generation preventing device.

4. An internal pollution preventing device for a dental cutting tool assembly according to claim 1 wherein the pressure fluid feed means comprises a negative pressure generation preventing device provided near the outlet of the pressure fluid, a cover provided on the outer periphery of the head and communicating with said negative pressure generation preventing device and an air feed pipe connected to said cover.

5. An internal pollution preventing device for a dental cutting tool assembly according to claim 3 or 4 wherein said negative pressure generation preventing device comprises covers provided with hollow parts for temporarily storing the pressure fluid.

6.        A dental cutting tool assembly comprising a head containing an air-driven motor and means for connecting a cutting tool to the motor, provision being made for discharging air adjacent the cutting tool to remove debris therefrom, the air being discharged both while the motor is being rotated and during a period after it has stopped.

7.        An assembly according to claim 6, wherein the air passes through a chamber before discharge and pressurised air is supplied to this chamber without being used to operate the motor.

8.        An assembly according to claim 6 or 7, wherein air is fed to the motor through a feed line and part of the air used for driving the motor is discharged through a discharge line, provision being made for automatically feeding air simultaneously through the feed line and the discharge line when the motor is to be stopped.

9.        An assembly according to claim 8, wherein the air is fed to the feed line and the discharge line at substantially the same pressure.

10.       An assembly according to claim 9, wherein the pressure differs from that used to drive the motor.

Fig.1

# Fig.2

0202802

# Fig.3

Fig.4

0202802

# Fig.5

# EUROPEAN SEARCH REPORT

Application number

EP 86 30 3296

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 441 503  (MICRO-MEGA) <br> * Page 1, lines 32-46; figure 1 * | 1,7 | A 61 C    1/05 <br> A 61 C    1/08 |
| Y | | 2-4 | |
| | --- | | |
| Y | CH-A-  344 177  (R. PAGE) <br><br> * Page 3, lines 63-84; figure 1 * | 2-4,6, 8 | |
| | --- | | |
| Y | US-A-3 256 604  (J. BORDEN) <br> * Figure 10 * | 6,8 | |
| | ----- | | |

TECHNICAL FIELDS SEARCHED (Int. Cl.4)

A 61 C

The present search report has been drawn up for all claims

| Place of search | Date of completion of the search | Examiner |
|---|---|---|
| THE HAGUE | 23-07-1986 | EHRSAM F.J.A. |